Europäisches Patentamt

(19) European Patent Office

Office européen des brevets

(11) EP 0 751 808 B1

(12) EUROPEAN PATENT SPECIFICATION

(45) Date of publication and mention
of the grant of the patent:
08.03.2000 Bulletin 2000/10

(51) Int. Cl.$^7$: B01D 3/16

(86) International application number:
PCT/EP95/01078

(21) Application number: 95913150.9

(22) Date of filing: 21.03.1995

(87) International publication number:
WO 95/25571 (28.09.1995 Gazette 1995/41)

(54) **COLUMN FOR COUNTER-CURRENTLY CONTACTING GAS AND LIQUID**

KOLONNE FÜR DEN GEGENSTROMKONTAKT VON GAS UND FLÜSSIGKEIT

COLONNE DE MISE EN CONTACT A CONTRE-COURANT D'UN GAZ ET D'UN LIQUIDE

(84) Designated Contracting States:
BE CH DE DK FR GB IT LI NL SE

(30) Priority: 24.03.1994 EP 94200775

(43) Date of publication of application:
08.01.1997 Bulletin 1997/02

(73) Proprietor:
SHELL INTERNATIONALE RESEARCH
MAATSCHAPPIJ B.V.
2596 HR Den Haag (NL)

(72) Inventor: KONIJN, Gerrit
NL-1031 CM Amsterdam (NL)

(56) References cited:
EP-A- 0 562 689          DD-A- 109 806
US-A- 1 983 762

• "Mathematical description ... " by N.I. Saval'ev
and N.A. Nikolaev, Kirov Kazan Chemical
Institute, translated from Teoreticheskie Osnovy
Kimicheskoi Tekhnologii, Vol.23, No.4, pp 435-
444, 1989

**Description**

The present invention relates to a normally vertical column for counter-currently contacting gas and liquid to exchange heat and/or matter between the gas and the liquid. The column is provided with inlets and outlets for fluids. The position of the inlets and outlets depends on the use of the column: when the column is used to remove contaminants from a gas mixture by counter-currently contacting the gas mixture with an absorbent liquid the column has a gas inlet and a liquid outlet arranged in its lower end and a liquid inlet and a gas outlet arranged in its upper end, and when the column is used for distilling a feed the column has a feed inlet arranged near its middle part, a gas inlet and a liquid outlet arranged in its lower end and a liquid inlet and a gas outlet arranged in its upper end.

In counter-currently contacting gas flows upwards and liquid flows downwards through the column. To allow contacting of upwardly flowing gas and downwardly flowing liquid, the column is provided with a plurality of horizontal contact trays arranged axially spaced apart in the column. Such a contact tray can be a so-called crossflow contact tray or a so-called counter-current contact tray. A crossflow contact tray is provided with passages and a downcomer which opens below the contact tray, wherein during normal operation gas flows upwards through the passages and liquid flows from the contact tray downwards through the downcomer. A counter-current contact tray is provided with passages only and with no downcomer, wherein during normal operation gas flows upwards through the passages and liquid flows from the contact tray can trickle downwards through the passages.

During normal operation of a column provided with a crossflow contact tray gas flows upwards through the passages of the contact tray and liquid is supplied onto the contact tray through the downcomer of the next higher contact tray. Liquid collected on the contact tray forms a layer and contacting of gas and liquid takes place in the layer of liquid on the contact tray. The thickness of the liquid layer is determined by the height of the weir of the downcomer. Liquid flowing over the weir is removed through the downcomer, and gas disengaged from the liquid on the contact tray flows upwards to the next higher contact tray on which it is again contacted with liquid. Some liquid will be entrained with the upwardly flowing gas, and the presence of liquid in the gas adversely affects the performance of the column.

To reduce the amount of entrained liquid it has been proposed in USA patent specification No. 1 983 762 to add to the column a plurality of horizontal separation trays provided with swirl tubes and with means for removing liquid from the separation tray, wherein each separation tray is arranged above a contact tray. The next higher contact tray is then arranged above the separation tray.

A swirl tube is a circle cylindrical pipe in which swirl imparting means are arranged. During normal operation gas with entrained liquid flows through the swirl tube, and the swirl imparting means cause the gas to rotate; under influence of centrifugal forces entrained liquid moves away from the centre of the swirl tube and is collected on the inner surface of the circle cylindrical pipe where a film of liquid is formed. At the upper end of the pipe the liquid film breaks up and liquid droplets move away from the pipe; these liquid droplets should fall on the separation tray. The path of some of the liquid droplets will be such that they hit the contact tray above the separation tray, and they are entrained through the passages of that contact tray. To reduce this entrainment the upper ends of the swirl tubes discharge straight into the passages of the contact tray above the separation tray, so that the gas flows towards the passages of the contact tray and the liquid hits the contact tray around the passages. Thereto the known separation tray comprises as many swirl tubes as there are passages in the next higher contact tray, wherein the diameter of the swirl tubes is equal to the diameter of the passages in the next higher contact tray, and wherein the layout of the swirl tubes is similar as the layout of the passages. Consequently the net free area of the known separation tray equals the net tree area of the contact tray. The net free area of the separation tray is defined as the area of the passages in the swirl tubes divided by the active area of the separation tray, and the net free area of the contact tray is defined as the area of the passages divided by the active area of the contact tray. A disadvantage of the known column is that a large number of swirl tubes are required, and this makes the known column expensive.

East German patent specification No. 109 806 discloses a column for counter-currently contacting gas and liquid having inlets and outlets for fluids, is provided with a plurality of horizontal contact trays arranged axially spaced apart in the column, each contact tray being provided with passages, and which column is further provided with a plurality of horizontal separation trays provided with swirl tubes and with means for removing liquid from the separation tray, each separation tray being arranged above a contact tray.

The known separation tray further comprises a cover plate which is arranged above the swirl tubes, the cover plate is provided with openings through which tubes extend downwardly, these tubes have a smaller diameter than the diameter of the swirl tubes and they extend into the upper ends of the swirl tubes. A serious drawback of the known separation tray is that the cover plate closes the space between the swirl tubes so that gas entrained with the liquid cannot escape from this space.

It is an object of the present invention to provide a separation tray which has an improved gas/liquid separation.

To this end the column for counter-currently contacting gas and liquid according to the present invention is characterized in that each swirl tube is provided with an annular U-turn deflector arranged over the upper end of the swirl tube in such a way that each U-turn deflector is provided over only one swirl tube, so that liquid flowing upwards along the inner surface of the wall of the swirl tube breaks away at the upper end of the swirl tube and is caused to flow downwards along the outer surface of the wall of the swirl tube.

The annular U-turn deflector guides liquid to the tray, and gas which is entrained with the liquid can pass between the annular U-turn deflectors.

During normal operation liquid droplets will break away from the liquid film at the upper end of the swirl tube. The liquid droplets are forced by the U-turn deflector to move downwards to the separation tray. Consequently the liquid droplets will not normally move upwards to the next higher contact tray. Thus it is not needed that the upper ends of the swirl tubes discharge straight into the passages of the contact tray above the separation tray, and therefore in the column according to the invention the diameters of the swirl tubes are much larger than the diameter of the passages in the contact tray. This further means that less swirl tubes can be used. Suitably the diameter of a swirl tubes is at least three times the diameter of a passage, and the diameter of the swirl tube does not exceed twenty times the diameter of the passage.

A further advantage of the column according to the present invention is that the net free area of the separation tray is larger than the net free area of the known separation tray. As the pressure drop over the separation tray increases with increasing gas velocity in the swirl tubes, and as this gas velocity is inverse proportional to the net free area, the pressure drop over the separation tray is smaller than the pressure drop over the known separation tray.

The invention will now be described by way of example in more detail with reference to the drawings, wherein

Figure 1 shows schematically a cross-sectional view of part of the column for counter-currently contacting gas and liquid according to the present invention, and
Figure 2 shows schematically a cross-sectional view of part of an alternative column for counter-currently contacting gas and liquid according to the present invention.

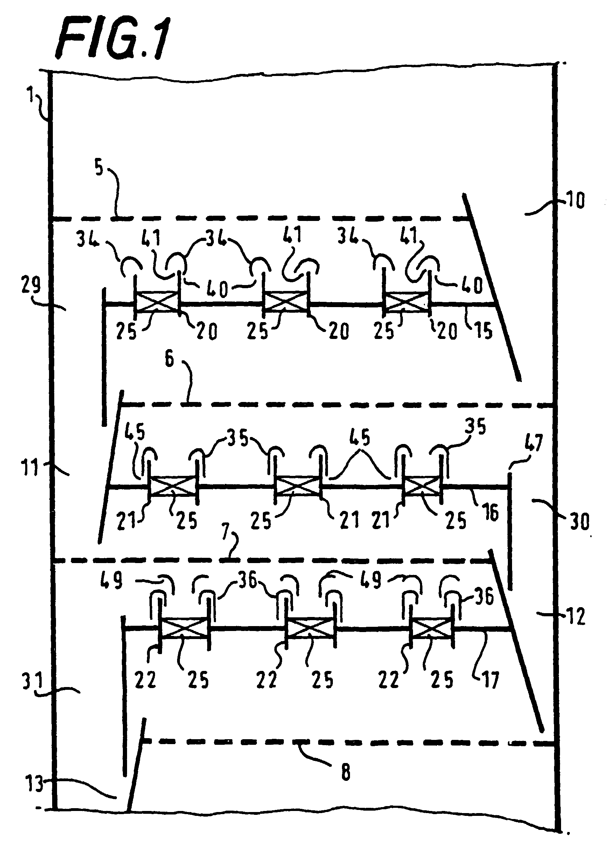

Reference is now made to Figure 1. The column 1 is provided with horizontal contact trays 5, 6, 7 and 8 arranged axially spaced apart in the column 1. The horizontal contact trays 5, 6, 7 and 8 are so-called sieve trays. A sieve tray is a flat plate provided with passages in the form of holes in it; for the sake of clarity the holes in the plates have not been referred to by reference numerals. The horizontal contact trays 5, 6, 7 and 8 are provided with downcomers 10, 11, 12 and 13, respectively. The downcomer 10 opens below the contact tray 5 onto the next lower contact tray 6, and so on. The tray in which downcomer 13 opens is not shown, and in practice the downcomer pertaining to lowermost separation tray of the column will open into the lower part of the column.

The column 1 is provided with a gas inlet and a liquid outlet arranged in its lower end and a liquid inlet and a gas outlet arranged in its upper end; the gas inlet, the liquid outlet, the liquid inlet and the gas outlet are not shown in Figure 1.

Column 1 is furthermore provided with horizontal separation trays 15, 16 and 17, each separation tray 15, 16 or 17 being arranged above a contact tray 6, 7 or 8. The separation trays 15, 16 and 17 are provided with swirl tubes 20, 21 and 22. The swirl tubes 20, 21 and 22 are internally provided with swirl imparting means 25, for example swirl vanes. Each separation tray 15, 16 or 17 is furthermore provided with means for removing liquid from the separation tray in the form of a downcomer 29, 30 and 31. The downcomer 29 of separation tray 15 opens via downcomer 11 on the second contact tray 7 below the separation tray 15, and so on. Please note that the second contact tray below separation tray 17 is not shown, and the separation tray above contact tray 5 is not shown either.

Each swirl tube 20, 21 or 22 is provided with an annular U-turn deflector 34, 35 and 36, respectively, arranged over the upper end of the swirl tube 20, 21 or 22.

During normal operation gas is supplied to the column 1 through the gas inlet (not shown) at the lower end of the column 1 and liquid is supplied to the column 1 through the liquid inlet (not shown) at the upper end of the column 1. In the column 1 gas and liquid are contacted on the horizontal contact trays 5, 6, 7 and 8 to exchange matter and or heat, and after contacting liquid and gas are removed from the column 1 through the gas outlet (not shown) at the upper part of column 1 and through the liquid outlet (not shown) at the lower part of column 1. Excess liquid is removed from the contact trays 5, 6, 7 and 8 through the downcomers 10, 11, 12 and 13, and some liquid will be entrained with the upward flowing gas.

The performance of a column is determined by the maximum gas flow rate as a function of the liquid flow rate; wherein the maximum gas flow rate is the gas flow rate at which entrainment of liquid by the upwards flowing gas starts.

To improve the performance of the column, entrainment has to be reduced. To reduce entrainment of liquid the column 1 is provided with the separation trays 15, 16 and 17. In the swirl tubes 20, 21 and 22 of the separation trays 15, 16 and 17 the upwardly flowing gas with entrained liquid is subjected to a centrifugal motion and as a result a liquid is separated from gas. The separated liquid is collected on the inner surfaces of the swirl tubes 20, 21 and 22. At upper ends of the swirl tubes 20, 21 and 22 the liquid will break away from the inner surfaces of the swirl tubes 20, 21 and 22. The U-turn deflectors 34, 35 and 36 direct the liquid which breaks away towards the floors of the separation trays 15, 16 and 17. From there liquid is removed through the downcomers 29, 30 and 31 which open in the downcomers 11, 12 and 13 of the contact trays 6, 7 and 8.

To illustrate the improved performance of the column according to the present invention, tests were carried out in a column having an internal diameter of 45 cm. In this column four contact trays were installed with a tray spacing of 600 mm. The contact trays were sieve trays with a net free area of 20%, and each contact tray was provided with a downcomer opening below the tray. The column was provided with four separation trays, each arranged directly above a contact tray. The separation trays were each provided with 5 swirl tubes having a diameter of 110 mm, and each swirl tube was provided with a U-turn deflector. The net free area of the separation tray was 30%.

The column was operated for liquid flow rates which corresponded to flow parameters in the range of from 0.05 to 0.15, wherein the flow parameter is defined as $(L/G)*(\rho_l/\rho_g)^{1/2}$. For these flow parameters, maximum gas flow rates corresponding to maximum load factors in the range of 0.20 to 0.18 m/s were obtained, wherein the load factor is defined as $U_g*(\rho_g/(\rho_l-\rho_g))^{1/2}$. In the above definitions: L is the liquid flow rate in $m^3/s$, G is the gas flow rate in $m^3/s$, $\rho_l$ is the liquid density in $kg/m^3$, $\rho_g$ is the gas density in $kg/m^3$, and $U_g$ is the superficial gas velocity in m/s.

The pressure drop over the combination of contact tray and separation tray was between 500 and 4 000 Pa.

Now two examples of columns not according to the invention are discussed. Without the separation trays, the maximum load factor was about 0.12 to 0.10 for the same flow parameters, and the pressure drop was between 250 and 2 000 Pa. Consequently the column according to the invention provides a high maximum load factor at the expense of a larger pressure drop.

Replacing the separation trays in the column according to the invention by separation trays having a net free area of 20%, which is the same as the net free area of the sieve tray, and the swirl tubes by swirl tubes with no U-turn deflectors, results in a lower maximum load factor and a larger pressure drop.

To separate liquid from gas the swirl tubes are provided with an annular U-turn deflector. During normal operation liquid flows upwards along the inner surface of the wall of the swirl tube, and this liquid flows into an annular channel defined by the annular U-turn deflector and the wall of the swirl tube. Liquid flows upwards along the inner surface of the wall of the swirl tube and downwards along the outer surface of the wall of the swirl tube. Some gas will flow with the liquid through the annular channel.

To suppress gas flowing with the liquid through the annular channel, the annular U-turn deflector is so shaped that the part of the annular channel in which the liquid flows downwards is converging in downward direction. This design of the annular U-turn deflector is applied in the swirl tubes 20 as shown in Figure 1. The surface area of the ring formed by the rim 40 of the U-turn deflector 34 and the outer surface of the swirl tube 20 is smaller than the surface area of the ring formed by the inner surface of the U-turn deflector 34 and the inner surface of the swirl tube 20 at the top 41 of the swirl tube.

Alternatively entrainment of gas with liquid can be prevented by sealing the opening of the U-turn deflector by liquid present on the separation tray during normal operation. This design is applied in the swirl tubes 21, wherein the outer wall 45 of the U-turn deflector 35 extends to below the top of the weir 47 of the downcomer 30.

To further reduce liquid entrainment, the swirl tube 22 is provided with a droplet catcher in the form of a widening ring 49 arranged at the gas outlet end of the U-turn deflector 36.

In place of a sieve tray the contact tray can be any suitable contact tray, for example a valve tray.

In the above description of the invention, liquid removed by the separation tray 15 was returned to the contact tray 7 below the contact tray 6 to which the separation tray 15 pertains; and this also applied to the other separation trays 16 and 17. In the event that the column is operated with low liquid loads, at least part of the liquid separated by a separation tray can be returned to the contact tray to which the separation tray pertains. This can be done by using downcomer pipes arranged in openings in the separation tray, or by using one downcomer that opens on the contact tray below the separation tray.

The invention provides an improvement of an existing column in that entrainment of liquid with gas flowing to the next higher tray is reduced. In this way the invention allows operating a column at a higher load factor.

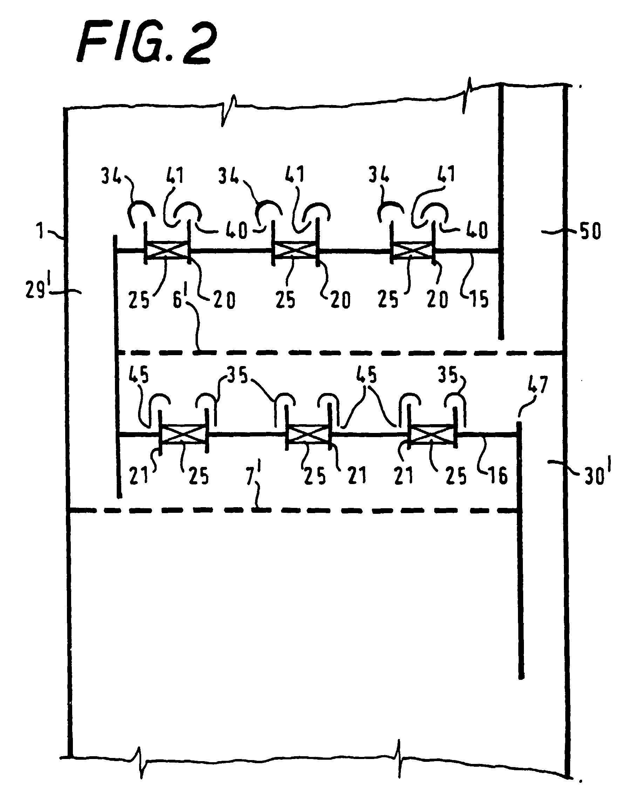

Before the alternative embodiment of Figure 2 is discussed, attention is paid to the effect of increasing the load factor on the performance of a contact tray. To this end reference is made to contact tray 7 (Figure 1) having downcomer 12. During normal operation gas flows upwards through the passages of the contact tray 7 and is brought in contact with a layer of liquid present on the tray 7. After contacting liquid and gas separate, gas with entrained liquid flows upwards and liquid in which some gas is dispersed is removed from the contact tray 7 through the downcomer 12. The downcomer 12 is filled with a gas-in-liquid dispersion. The height of the liquid in the downcomer 12 is proportional to the pressure drop over the contact tray 7. Because this pressure drop is proportional to the superficial gas velocity and thus to the load factor, the liquid height in the downcomer is proportional to the load factor. Since the liquid height cannot exceed the height of the downcomer 12, the height of the downcomer limits the load factor.

To do away with the limitation formed by the downcomer of the contact tray, it is proposed to replace the crossflow contact tray by a counter-current contact tray which is a contact tray with no downcomer.

Reference is now made to Figure 2 showing an alternative embodiment of the present invention wherein parts that are similar to parts shown in Figure 1 have got the same reference numerals.

The embodiment shown in Figure 2 differs in two ways from the embodiment shown in Figure 1. First the contact trays have been replaced by counter-current contact trays. For the sake of simplicity only two contact trays have been shown, these counter-current contact trays are referred to with reference numerals 6' 7'. Second the downcomer of a separation tray opens on the second contact tray below that separation tray: this implies that the downcomer of the separation tray 15 extends to the second contact tray 7' below the separation tray 15 and that the downcomer of the separation tray 16 extends to the second contact tray (not shown) below the separation tray 16. The extended downcomers are referred to with reference numerals 29' and 30'. For the sake of completeness, reference numeral 50 refers to an extended downcomer from a separation tray (not shown) arranged higher up in the column 1.

During normal operation gas is supplied to the column 1 through the gas inlet (not shown) at the lower end of the column 1 and liquid is supplied to the column 1 through the liquid inlet (not shown) at the upper end of the column 1. In the column 1 gas and liquid are contacted on the horizontal contact trays of which two are shown and referred to with reference numerals 6' and 7' to exchange matter and or heat, and after contacting liquid and gas are removed from the column 1 through the gas outlet (not shown) at the upper part of column 1 and through the liquid outlet (not shown) at the lower part of column 1.

Gas flowing upwards through the column 1 is contacted with liquid from downcomer 29' on contact tray 7' and with liquid from downcomer 50 on contact tray 6'. The contact trays 6' and 7' are so-called counter-current contact trays which trays do not have a downcomer. The name counter-current contact tray originates from the fact that, at low gas velocities, gas passes upwards through the holes in the tray and liquid trickles downwards through these holes. However, the column 1 of the present invention is operated at relatively high load factors, which implies that the gas velocity is large enough to entrain liquid. Thus liquid is removed from the tray 7' with the upwardly flowing gas, and liquid and gas are separated in the swirl tubes 25 of the separation tray 16. Liquid separated from the gas flows through downcomer 30' to a contact tray (not shown) arranged below contact tray 7'. The upwardly flowing gas is contacted with liquid on contact tray 6', which liquid is supplied through downcomer 50. Furthermore liquid is removed from the tray 6' with the upwardly flowing gas, and liquid and gas are separated in the swirl tubes 25 of separation tray 15. Liquid separated from the gas flows through downcomer 29' to the contact tray 7' arranged below contact tray 6'.

There are two advantages associated with this embodiment. A first advantage is that the downcomers 29' and 30' are higher than in the embodiment as shown in Figure 1. Consequently the liquid height in these downcomers can be higher and thus the column shown in Figure 2 can operate at higher load factors. A second advantage is associated with the fact that the liquid separated by the swirl tubes 25 is substantially free from gas. Because liquid separated by means of swirl tubes is substantially free from gas a substantially clear liquid flows through the downcomers 29' and 30'. This implies that, for the same amount of liquid, the downcomer of a separation tray has a smaller cross-sectional area than the downcomer of a contact tray which has to accommodate a dispersion of gas in liquid. The difference is size can be up to 75%. Consequently the useful area of the contact trays 6' and 7' is much larger than that of the contact trays 6 and 7 as shown in Figure 1.

## Claims

1. Column (1) for counter-currently contacting gas and liquid having inlets and outlets for fluids, which column (1) is provided with a plurality of horizontal contact trays (5, 6, 7, 8) arranged axially spaced apart in the column (1), each contact tray (5, 6, 7, 8) being provided with passages, and which column (1) is further provided with a plurality of horizontal separation trays (15, 16, 17) provided with swirl tubes (20, 21, 22) within which swirl imparting means are arranged and with means for removing liquid from the separation tray (15, 16, 17), each separation tray (15, 16, 17) being arranged above a contact tray (5, 6, 7, 8), characterized in that each swirl tube (20, 21, 22) is provided with an annular U-turn deflector (34, 35, 36) arranged over the upper end of the swirl tube (20, 21, 22) in such a way that each U-turn deflector (34, 35, 36) is provided over only one swirl tube (20, 21, 22), so that liquid flowing upwards along the inner surface of the wall of the swirl tube breaks away at the upper end thereof and is caused to flow downwards along the outer surface of the wall of the swirl tube.

2. Column according to claim 1, characterized in that each contact tray (5, 6, 7, 8) is provided with a downcomer (10, 11, 12, 13) opening below the contact tray (5, 6, 7, 8).

3. Column according to claim 1 or 2, characterized in that the means for removing liquid from the separation tray (15, 16, 17) includes a downcomer (29, 30, 31) opening below the separation tray (15, 16, 17).

4. Column according to claim 1, characterized in that each contact tray (5, 6, 7, 8) is provided with a downcomer (10, 11, 12, 13) opening below the contact tray (5, 6, 7, 8), and wherein the means for removing liquid from the separation tray (15, 16, 17) includes a downcomer (29, 30, 31) opening into the downcomer (11, 12, 13) of the contact tray (6, 7, 8) below the separation tray (15, 16, 17).

5. Column according to claim 3, characterized in that the downcomer (29') of a separation tray (15) opens on the second contact tray (7') below the separation tray (15).

6. Column according to claim 1, characterized in that the means for removing liquid from the separation tray (15) includes a downcomer (29') opening on the second contact tray (7') below the separation tray (15), and wherein the contact tray (6', 7') is a counter-current contact tray.

7. Column according to anyone of the claims 3-6, characterized in that the outer wall of the U-turn deflector (34, 35, 36) extends to below the top of the weir (47) of the downcomer (30).

8. Column according to anyone of the claims 1-6, characterized in that the surface area of the ring formed by the rim (41) of the U-turn deflector (34) and the outer surface of the swirl tube (20) is smaller than the surface area of the ring formed by the inner surface of the U-turn deflector (34) and the outer surface of the swirl tube (20) at the top of the swirl tube (20).

9. Column according to anyone of the claims 1-8, characterized in that the swirl tubes (22) are provided with a droplet catcher (49) arranged at the gas outlet end of the U-turn deflector (36).

**Patentansprüche**

1. Kolonne (1) für den Gegenstromkontakt von Gas und Flüssigkeit, mit Einlässen und Auslässen für Fluide, welche Kolonne (1) mit mehreren horizontalen Kontaktschalen (5, 6, 7, 8) versehen ist, die mit gegenseitigem Axialabstand in der Kolonne (1) angeordnet sind, wobei jede Kontaktschale (5, 6, 7, 8) mit Durchlässen versehen ist, und welche Kolonne (1) ferner mit mehreren horizontalen Trennschalen (15, 16, 17) ausgestattet ist, die mit Verwirbelungsrohren (20, 21, 22) versehen sind, in welchen Verwirbelungsmittel angeordnet sind, und mit Mitteln zum Entfernen von Flüssigkeit von der Trennschale (15, 16, 17), wobei jede Trennschale (15, 16, 17) oberhalb einer Kontaktschale (5, 6, 7, 8) angeordnet ist, dadurch gekennzeichnet, daß jedes Verwirbelungsrohr (20, 21, 22) mit einer ringförmigen U-Umlenkplatte (34, 35, 36) versehen ist, die über dem oberen Ende des Verwirbelungsrohres (20, 21, 22) so angeordnet ist, daß jede U-Umlenkplatte (34, 35, 36) über nur einem Verwirbelungsrohr (20, 21, 22) liegt, so daß Flüssigkeit, die nach oben entlang der Innenoberfläche der Wand des Verwirbelungsrohres strömt, an dessen oberem Ende abreißt und dazu veranlaßt wird, nach unten entlang der Außenoberfläche der Wand des Verwirbelungsrohres zu strömen.

2. Kolonne nach Anspruch 1, dadurch gekennzeichnet, daß jede Kontaktschale (5, 6, 7, 8) mit einem Fallrohr (10, 11, 12, 13) versehen ist, das unterhalb der Kontaktschale (5, 6, 7, 8) ausmündet.

3. Kolonne nach Anspruch 1 oder 2, dadurch gekennzeichnet, daß die Mittel zum Entfernen von Flüssigkeit aus der Trennschale (15, 16, 17) ein Fallrohr (29, 30, 31) aufweisen, das unterhalb der Trennschale (15, 16, 17) ausmündet.

4. Kolonne nach Anspruch 1, dadurch gekennzeichnet, daß jede Kontaktschale (5, 6, 7, 8) mit einem Fallrohr (10, 11, 12, 13) ausgestattet ist, das unter der Kontaktschale (5, 6, 7, 8) ausmündet, wobei die Mittel zum Entfernen von Flüssigkeit aus der Trennschale (15, 16, 17) ein Fallrohr (29, 30, 31) aufweisen, das in das Fallrohr (11, 12, 13) der Kontaktschale (6, 7, 8) unter der Trennschale (15, 16, 17) mündet.

5. Kolonne nach Anspruch 3, dadurch gekennzeichnet, daß das Fallrohr (29') einer Trennschale (15) auf die zweite Kontaktschale (7') unter der Trennschale (15) mündet.

6. Kolonne nach Anspruch 1, dadurch gekennzeichnet, daß die Mittel zum Entfernen von Flüssigkeit von der Trennschale (15) ein Fallrohr (29') aufweisen, das auf die zweite Kontaktschale (7') unter der Trennschale (15) ausmündet, wobei die Kontaktschale (6', 7') eine Gegenstrom-Kontaktschale ist.

7. Kolonne nach einem der Ansprüche 3-6, dadurch gekennzeichnet, daß die Außenwand der U-Umlenkplatte (34, 35, 36) sich bis unter die Oberseite des Wehres (47) des Fallrohres (30) erstreckt.

8. Kolonne nach einem der Ansprüche 1-6, dadurch gekennzeichnet, daß der Oberflächenbereich des Ringes, welcher vom Rand (41) der U-Umlenkplatte (34) und der Außenoberfläche des Verwirbelungsrohres (20) gebildet wird, kleiner ist als der Oberflächenbereich des Ringes, der von der Innenoberfläche der U-Umlenkplatte (34) und der Außenoberfläche des Verwirbelungsrohres (20) an der Oberseite des Verwirbelungsrohres (20) gebildet wird.

9. Kolonne nach einem der Ansprüche 1-8, dadurch gekennzeichnet, daß die Verwirbelungsrohre (22) mit einem Tröpfchenfänger (49) ausgestattet sind, welcher am Gasauslaßende der U-Umlenkplatte (36) angeordnet ist.

**Revendications**

1. Colonne (1) pour la mise en contact à contre-courant de gaz et liquides, présentant des entrées et des sorties pour les fluides, laquelle colonne (1) est dotée de plusieurs plateaux horizontaux de contact (5, 6, 7, 8) agencés à écartement mutuel axial dans la colonne (1), chaque plateau de contact (5, 6, 7, 8) étant doté de passages, laquelle colonne (1) étant en outre dotée d'une pluralité de plateaux horizontaux de séparation (15, 16, 17) dotés de tubes de tourbillonnage (20, 21, 22) dans lesquels sont disposés des moyens de tourbillonnage, et de moyens pour enlever le liquide du plateau de séparation (15, 16, 17), chaque plateau de séparation (15, 16, 17) étant agencé au-dessus d'un plateau de contact (5, 6, 7, 8), caractérisée en ce que chaque tube de tourbillonnage (20, 21, 22) est doté d'un déflecteur annulaire en U (34, 35, 36) agencé au-dessus de l'extrémité supérieure du tube de tourbillonnage (20, 21, 22) de telle sorte que chaque déflecteur en U (34, 35, 36) soit prévu au-dessus d'un seul tube de tourbillonnage (20, 21, 22), de telle sorte que le liquide s'écoulant vers le haut le long de la surface intérieure de la paroi du tube de tourbillonnage se sépare à son extrémité supérieure et est amené à s'écouler vers le bas le long de la surface extérieure de la paroi du tube de tourbillonnage.

2. Colonne selon la revendication 1, caractérisée en ce que chaque plateau de contact (5, 6, 7, 8) est doté d'un tube de descente (10, 11, 12, 13) s'ouvrant en dessous du plateau de contact (5, 6, 7, 8).

3. Colonne selon la revendication 1 ou 2, caractérisée en ce que le moyen pour enlever le liquide du plateau de séparation (15, 16, 17) comprend un tube de descente (29, 30, 31) s'ouvrant en dessous du plateau de séparation (15, 16, 17).

4. Colonne selon la revendication 1, caractérisée en ce que chaque plateau de contact (5, 6, 7, 8) est doté d'un tube de descente (10, 11, 12, 13) s'ouvrant en dessous du plateau de contact (5, 6, 7, 8), et dans lequel le moyen pour enlever le liquide du plateau de séparation (15, 16, 17) comprend un tube de descente (29, 30, 31) s'ouvrant dans le tube de descente (11, 12, 13) du plateau de contact (6, 7, 8) situé en dessous du plateau de séparation (15, 16, 17).

5. Colonne selon la revendication 3, caractérisée en ce que le tube de descente (29') d'un plateau de séparation (15) s'ouvre sur le deuxième plateau de contact (7') situé en dessous du plateau de séparation (15).

6. Colonne selon la revendication 1, caractérisée en ce que le moyen pour enlever le liquide du plateau de séparation (15) comprend un tube de descente (29') s'ouvrant sur le deuxième plateau de contact (7') situé en dessous du plateau de séparation (15), et dans lequel le plateau de contact (6', 7') est un plateau de contact à contre-courant.

7. Colonne selon l'une quelconque des revendications 3 à 6, caractérisée en ce que la paroi extérieure du déflecteur en U (34, 35, 36) s'étend jusqu'en dessous du sommet du déversoir (47) du tube de descente (30).

8. Colonne selon l'une quelconque des revendications 1 à 6, caractérisée en ce que la superficie de l'anneau formé par le bord (41) du déflecteur en U (34) et la surface extérieure du tube de tourbillonnage (20) est inférieure à la superficie de l'anneau formé par la surface intérieure du déflecteur en U (34) et la surface extérieure du tube de tourbillonnage (20) au sommet du tube de tourbillonnage (20).

9. Colonne selon l'une quelconque des revendications 1 à 8, caractérisée en ce que les tubes de tourbillonnage (22) sont dotés d'un piège à gouttelettes (49) agencé à l'extrémité de sortie de gaz du déflecteur en U (36).

# *FIG.1*

# FIG.2